Europäisches Patentamt

European Patent Office

Office européen des brevets

(11) Veröffentlichungsnummer: **0 235 640 B1**

(19)

(12) **EUROPÄISCHE PATENTSCHRIFT**

(45) Veröffentlichungstag der Patentschrift: **07.10.92**

(21) Anmeldenummer: **87102016.0**

(22) Anmeldetag: **13.02.87**

(51) Int. Cl.⁵: **G01N 23/223**

(54) **Anordnung zur zerstörungsfreien Messung von Metallspuren.**

(30) Priorität: **01.03.86 DE 3606748**

(43) Veröffentlichungstag der Anmeldung:
**09.09.87 Patentblatt 87/37**

(45) Bekanntmachung des Hinweises auf die
Patenterteilung:
**07.10.92 Patentblatt 92/41**

(84) Benannte Vertragsstaaten:
**DE FR GB NL**

(56) Entgegenhaltungen:
**EP-A- 0 265 618**
**DE-B- 2 632 001**
**DE-B- 2 911 596**
**DE-U- 8 400 670**
**US-A- 4 169 228**

**NUCLEAR INSTRUMENTS & METHODS IN
PHYSICS RESEARCH Sektion A, Band A246,
Nr. 1/3, Mai 1986, Seiten 736-738, Amsterdam,
NL; A. IIDA et al.:"Grazing incidence X-ray
fluorescence analysis"**

(73) Patentinhaber: **GKSS-FORSCHUNGSZENTRUM
GEESTHACHT GMBH
Max-Planck-Strasse
W-2054 Geesthacht-Tesperhude(DE)**

(72) Erfinder: **Knoth,Joachim
Duwockskamp 14
W-2050 Hamburg 80(DE)**
Erfinder: **Schneider,Harald
Wandsbeker Ring 28
W-2054 Geesthacht(DE)**
Erfinder: **Schwenke,Heinrich
Fernsicht 4
W-2058 Escheburg(DE)**

(74) Vertreter: **Niedmers, Ole, Dipl.-Phys. et al
Patentanwälte Niedmers & Schöning Jessenstrasse 4
W-2000 Hamburg 50(DE)**

## Beschreibung

Die Erfindung betrifft ein Anordnung zur zerstörungsfreien Messung von Metallspuren in der Oberfläche von Materialproben, bei der die Oberfläche mittels Röntgenstrahlung beaufschlagt und mit einem über der Materialprobe befestigten Detektor spektrometrisch die von der Materialprobe ausgehende Strahlung untersucht wird und bei der die Röntgenstrahlung streifend mittels einer verstellbaren Röntgenquelle auf die Oberfläche der Materialprobe ausrichtbar sowie die Divergenz der anregenden Röntgenstrahlung mittels zweier Blenden begrenzt ist und die Blenden an einem als optische Bank dienenden Quarkörper angeordnet sind. Eine solche Anordnung ist aus der DE-AS 29 11 596 bekannt.

Silizium-Wafer bilden die Grundlage hochintegrierter elektronischer Bauelemente. An ihre Reinheit werden extreme Anforderungen gestellt. Die Reinheitsanforderungen sind besonders für die Oberfläche der Wafer produktionstechnisch schwierig zu erfüllen und erfordern eigentlich eine Produktkontrolle. Nach dem Stand der Technik gibt es jedoch keine Meßmethode, die die zerstörungsfreie Bestimmung von Verunreinigungen in Oberflächen bis hinunter zu etwa $10^{11}$ Atome/cm$^2$ in der Produktionslinie gestattet.

Mit der o. g. Anordnung ist es zwar möglich unter Ausnutzung der Effekte, die bei der Totalreflexion von Röntgenstrahlen auftreten, Oberflächen mit hinreichenden Empfindlichkeiten zu untersuchen, sie ist jedoch nur für Oberflächen mit einem maximalen Durchmesser von etwa 50 mm geeignet. Außerdem kann bei der angegebenen konstruktiven Lösung eine Kontamination des Prüflings durch die Berührung mit den metallischen Werkstoffen des Instruments nicht ausgeschlossen werden.

Der vorliegenden Erfindung liegt die Aufgabe zugrunde, metallische Verunreinigungen in der Oberfläche von z.B. Si-Wafern bis hinunter zu etwa $10^{11}$ Atome/cm$^2$ in der Produktionslinie zu bestimmen, wobei die Wafer durch den Meßvorgang nicht kontaminiert werden dürfen und Wafer mit einem Durchmesser bis zu etwa 150 mm an den durch die entsprechenden Normen festgelegten Positionen über ihre ganze Fläche abtastbar sein sollen.

Die Lösung ist in den kennzeichnenden Merkmalen des Anspruches 1 beschrieben.

Die übrigen Ansprüche geben vorteilhafte Weiterbildungen der Erfindung wieder.

Das wesentlich Neue der Erfindung ist in einer konstruktiven Lösung zu sehen, die es gestattet, den Effekt der Totalreflexion von Röntgenstrahlen an ebenen Oberflächen derart zu nutzen, daß es erstmals möglich ist, die Oberfläche auch der größten z.Z. verwendeten Silizium-Wafer zerstörungs- und kontaminationsfrei auf ihren Gehalt an metallischen Verunreinigungen im Bereich von $10^{11}$ Atome/cm$^2$ zu untersuchen. Dies wird u.a. durch die Verwendung eines Quarzblockes als optische Bank erreicht.

Aus der DE-U-84 00 670 ist eine Meßvorrichtung für die Röntgenfluorenszenzanalyse bekannt, bei der ein Probenträger Verwendung findet, der zusammen mit der Oberfläche eines Trägers für optische Mittel mittels eines gemeinsamen mechanischen Justierelementes eingestellt werden kann. Bei dieser bekannten Meßvorrichtung besteht der Träger zur Aufnahme der optischen Mittel aus einer metallischen Platte, die zur mechanischen Ausrichtung von Blenden und anderen die Strahlung beeinflußenden Aufsätzen dient. Die Einstellbarkeit des Probenträgers und der metallischen Platte ermöglicht es, die Röntgenstrahlung mit vergleichsweise geringem Fertigungs- und Justieraufwand so präzise zu kollimieren, daß sie ganz oder teilweise ohne Umlenkung direkt auf die Probenträger gerichtet werden kann, ohne daß eine Verschlechterung des Nachweisvermögens eintritt.

Aus der DE-B-26 32 001 ist eine Meßanordnung zur Röntgenfluorenszenzanalyse bekannt, die vollständig in einem evakuierbaren Gehäuse angeordnet ist, wobei die Messung entweder im Vakuum oder in einer Inertgas-Atmosphäre erfolgt. Die Anordnung dient zu auf einfache Weise durchführbaren Reihenuntersuchungen von Proben unter Vermeidung langwieriger Meßaufbauten. Für die Reihenuntersuchungen weist die Anordnung eine Karusselplatte auf, in der eine Mehrzahl von zu untersuchenden Proben angeordnet ist, die wahlweise in eine definierte Stellung vor einen Detektor gebracht werden können. Dazu ist ein Stempel vorgesehen, der von unten durch die Karusselplatte hindurch dann eine Probenträgerplatte gegen ein punktförmiges Wiederlager in eine genau definierte Stellung vor der Detektorachse bewegt. Die Vorrichtung ist bezüglich ihrer Hubbewegung im wesentlichen auf die Detektorachse ausgerichtet.

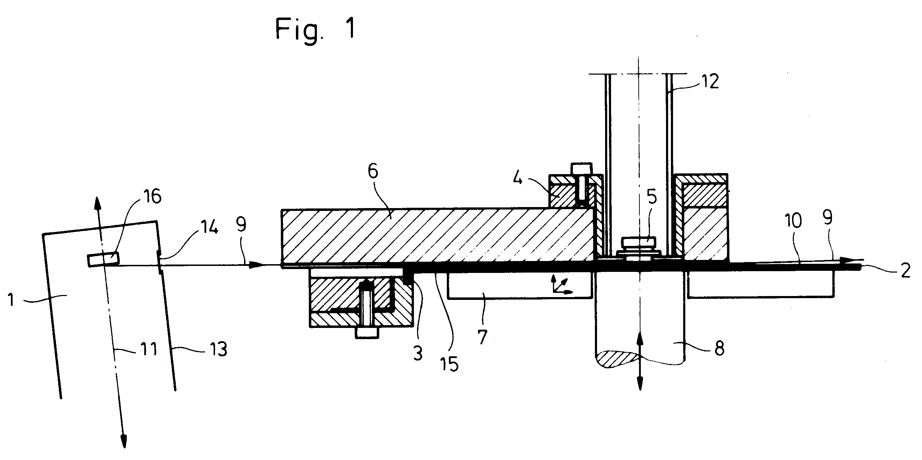

Die Erfindung wird im folgenden anhand eines Ausführungsbeispiels mittels der Figuren 1 - 7 näher erläutert.

Die Figur 1 zeigt zum Teil schematisch und im Schnitt die Anordnung, mit der Si-Wafer ausmeßbar sind. Die Strahlung 9 einer Röntgenröhre 1 wird streifend in einem Winkel von wenigen Bogenminuten auf die Oberfläche 10 des zu untersuchenden Objekts 2 gelenkt. Die Einstellung des wirksamen Einfallwinkels $\alpha'$ wird durch die Veränderung der Höhe 11 der Röntgenröhre 1 vorgenommen, die Divergenz des einfallenden Strahls 9 wird durch zwei Blenden 3 und 4 begrenzt. Liegt der eingestellte Winkel unter dem Grenzwinkel für die Totalreflexion, dringt die anregende Strahlung 9 nur minimal (ca. 10 nm) in den Wafer 2 ein, so daß nur die Atome der obersten Oberflächenschicht zur Aussendung von Fluoreszenzstrahlung angeregt werden. Diese Fluoreszenzstrahlung wird mit einem Detektor 5 aufgefangen und mit der in der Röntgenfluoreszenzanalyse üblichen Technik identifiziert und quantifiziert. Der Detektor 5 befindet sich in einer Abschirmung 12 und ist senkrecht zur Oberfläche 10 des Wafers 2 ausgerichtet.

Die wesentlichen Komponenten der Erfindung umfassen eine verstellbare Röhrenhalterung 13 mit Austrittsblende 14, einen speziell ausgearbeiteten Quarzblock 6, an dem zwei im $\mu$m-Bereich verstellbare Blenden 3 und 4 besonderer Bauart angebracht sind, sowie eine Positioniereinrichtung mit Andrückkolben 8 für den Wafer 2 sowie eine Vorrichtung zum Andrücken 7 der Waferoberfläche 10 an eine eben polierte Fläche 15 an der Unterseite des Quarzkörpers 6.

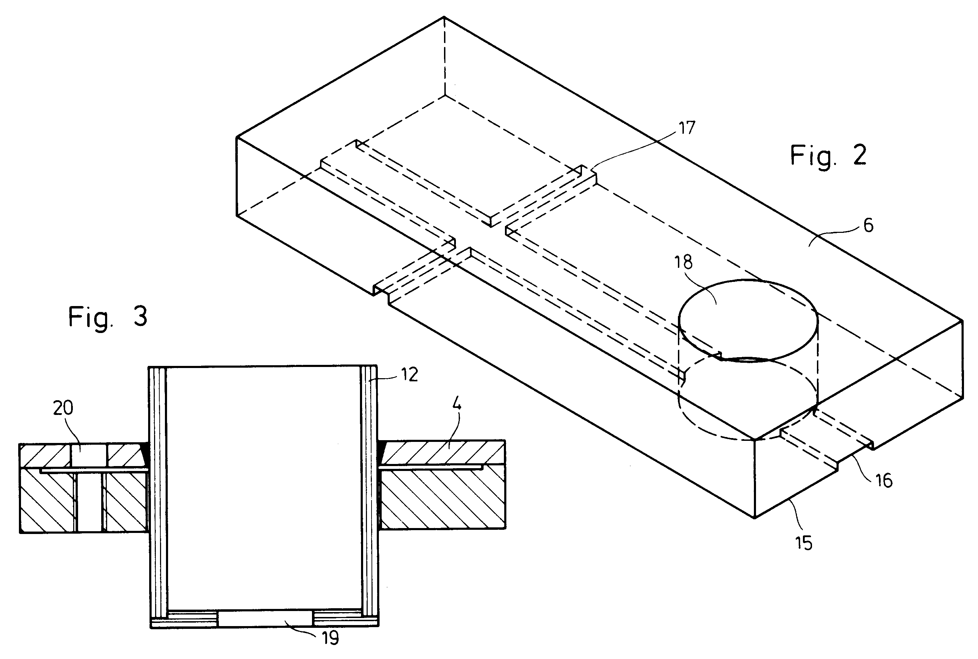

Der Quarzkörper 6 (Fig. 2) dient als optische Bank, dessen ebene und biegesteife Unterfläche 15 als hochgenaue Referenzfläche zur Ausrichtung der Waferoberfläche 10 durch Andrücken mit der flächenhaften Vorrichtung 7 und als Bezugsebene für die Höhe 11 der Feinfokus-Anode 16 der Röhre 1 sowie der Zungenblende 3 und der Zylinderblende 4 herangezogen wird. Auf diese Weise wird konstruktiv sichergestellt, daß die bei Winkeln von wenigen Bogenminuten naturgemäß kleinen Toleranzen eingehalten werden können. Die Waferoberfläche 10 kommt während des Meßvorgangs nur mit dem Quarz des quaderförmigen Quarzkörpers 6 in Berührung, einem Werkstoff, der maximale Kontaminationssicherheit gewährleistet.

In die Fläche 15 sind Kanäle 16, 17 für z. B. die Strahlung 9 sowie eine Bohrung 18 zur Aufnahme der Blenden- und Detektorhalterung 4, 12 eingefügt.

Aufgabe der Zungenblende 3 ist es sicherzustellen, daß die Röntgenstrahlung 9 nicht in die Kante des Wafers 2 eindringen kann, sondern auf dessen Oberfläche 10 trifft, die die Röntgenstrahlung 9 unter den gegebenen Bedingungen fast vollständig reflektiert. Zusätzlich sollte die Positioniereinrichtung 8 jedoch so gesteuert werden, daß für jede Meßposition auf dem Wafer 2 der durch die kreisrunde Form des Prüflings unvermeidliche Spalt zwischen Zungenblende 3 und Waferkante minimiert wird.

Die Blende 4 besteht aus einem Metallzylinder 12, dessen Boden eine Ringblende 19 aus Schwermetall, z. B. Tantal, für den Detektor 5 bildet (Fig. 3). Die Höhe dieser Blende 19 über der Waferfläche 10 wird durch Schrauben 20, die gegen eine Vorspannung arbeiten, auf wenige $\mu$m eingestellt.

Diese Blende 4, 19 definiert den zu prüfenden Ausschnitt der Waferoberfläche 10 exakt. Vor allem aber wird erreicht, daß das Strahlungsfeld im Bereich der Waferoberfläche 10 auf wenige $\mu$m zusammengedrückt wird, so daß erstens die Streustrahlung an der Luft und zweitens die störende Fluoreszenzstrahlung der Edelgase Argon und Krypton als Bestandteile der Luft auf ein Minimum reduziert wird. Durch diese neuartige Blende 4, 19, deren Einsatz erst durch den extrem flachen Einfall der Röntgenstrahlung 9 möglich ist, werden mit vergleichsweise sehr geringem technischen Aufwand ähnlich günstige Bedingungen erzielt, wie bei der Evakuierung des Probenraumes.

Neben der durch die Erfindung erstmals gegebenen Möglichkeit, metallische Oberflächenverunreinigung von Wafern 2 inline mit der Produktion zu messen, wird ein weiterer Vorteil erzielt:
Die angegebene Lösung gestattet es, in einfacher Weise durch Verstellen der Röhrenhöhe 11 sowie der Blende 3 den Einfallswinkel der primären Röntgenstrahlung 9 derart zu verändern, daß meßtechnisch zwischen der obersten Oberflächenschicht (ca. 10 nm bei Einfallswinkeln deutlich unterhalb des Grenzwinkels der Totalreflexion) und der dicht unter der Oberfläche 10 liegenden Struktur (ca. 100 - 1000 nm bei Winkeln um den Grenzwinkel der Totalreflexion) unterschieden werden kann.

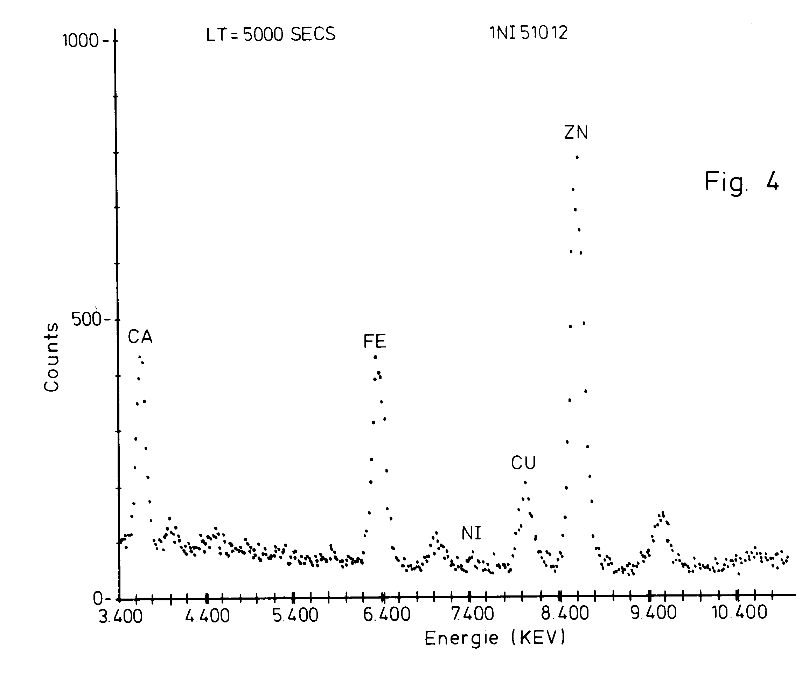

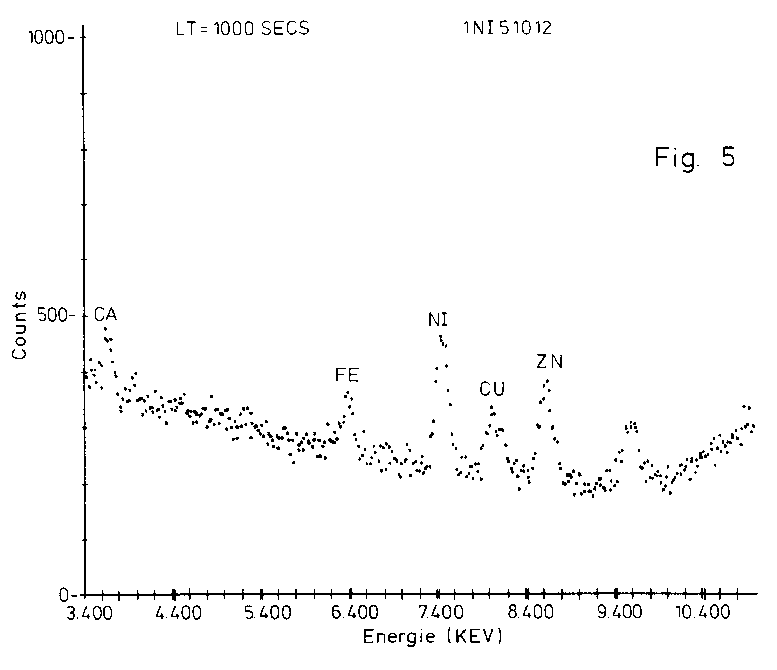

Den Beweis liefern die Fig. 4 und 5 mit Meßergebnissen an einer mit $10^{12}$ Nickel-Atome pro $cm^2$ implantierten Oberfläche 10 (Implantationstiefe etwa 50 nm). Zur Anregung wurde die K-Strahlung einer Mo-Röhre verwendet. Fig. 4 zeigt hierbei die metallischen Verunreinigungen der unmittelbaren Oberfläche 10, gemessen mit einem Einfallswinkel von 2 - 3 Bogenminuten. Dieselbe Position, gemessen mit einem Einfallswinkel von ca. 6 Bogenminuten (Fig. 5), zeigt zusätzlich ein deutliches Ni-Signal, das aus der etwa 50 nm unter der Oberfläche 10 liegenden Schicht stammt.

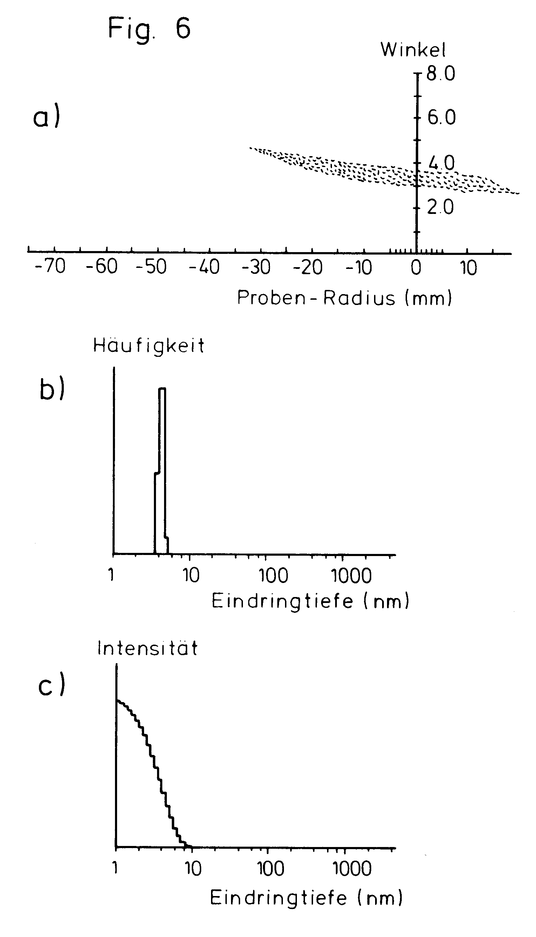

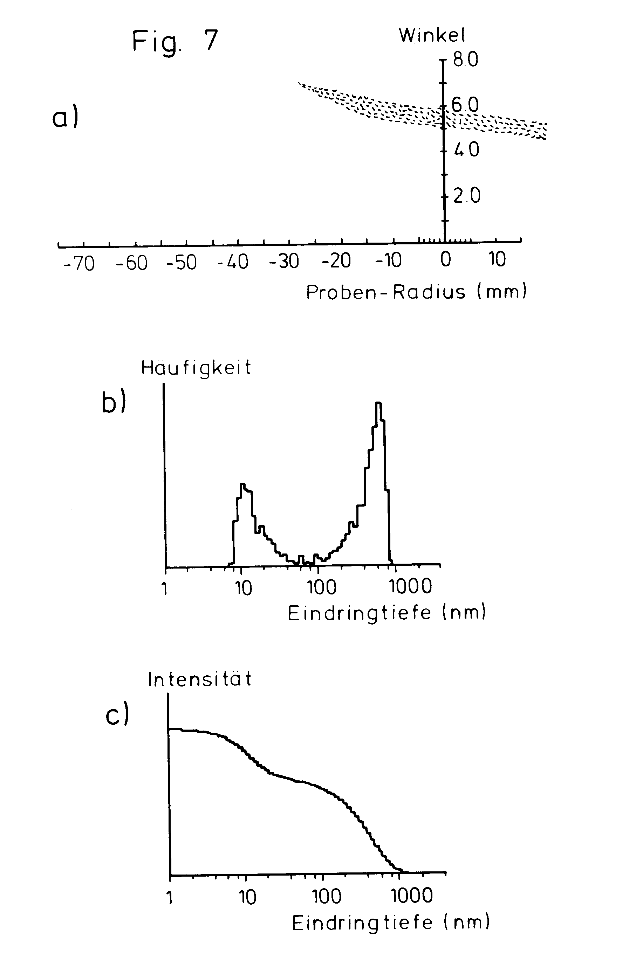

Die Meßergebnisse werden erklärt durch theoretische Berechnungen nach der Dispersionstheorie für die Totalreflexion von Röntgenstrahlen. Die Fig. 6a - c und 7a - c stellen Ergebnisse von Rechnungen für zwei realistische Konfigurationen entsprechend der erfindungsgemäßen Konstruktion dar. Fig. 6a zeigt die Intensitätsverteilung der auf den Wafer 2 treffenden Strahlung 9 zusammen mit den Auftreffwinkeln für eine Einstellung deutlich unterhalb des Grenzwinkels der Totalreflexion. Fig. 6b zeigt die Verteilung der Eindringtiefe der Strahlung 9, die in den ausgeblendeten Bereich (schraffiert in Fig. 6a) von etwa 10 mm fällt. Fig. 6c zeigt die Intensität der anregenden Strahlung 9 in der Wafer-Oberfläche 10.

Fig. 7a - c zeigen die entsprechenden Ergebnisse für eine Einstellung in der Nähe des Grenzwinkels der Totalreflexion.

## Patentansprüche

1. Anordnung zur zerstörungsfreien Messung von Metallspuren in der Oberfläche von Materialproben (2), bei der die Oberfläche mittels Röntgenstrahlung (9) beaufschlagt und mit einem über der Materialprobe (2) befestigten Detektor (5) spektrometisch die von der Materialprobe ausgehende Strahlung untersucht wird und bei der die Röntgenstrahlung (9) streifend mittels einer verstellbaren Röntgenquelle auf die Oberfläche der Materialprobe ausrichtbar sowie die Divergenz der anregenden Röntgenstrahlung mittels zweier Blenden (3,4) begrenzbar ist und die Blenden (3,4) an einem als optische Bank dienenden Quarzkörper (6) angeordnet sind, dadurch gekennzeichnet, daß eine Positioniervorrichtung (7,8) vorgesehen ist, mit der die Materialprobe (2) an einer Fläche (15) des Quarzkörpers (6) anpreßbar ist und daß die Positioniervorrichtung einen Andrückkolben (8) und eine Andrückebene (7) für die Materialprobe (2) aufweist, wobei die Eintrittsblende (3) eine Zungenblende und die Austrittsblende (4) eine Zylinderblende ist, die verstellbar bezüglich der Fläche (15) sind.

2. Anordnung nach Anspruch 1, dadurch gekennzeichnet, daß die Austrittsblende (4) ein Zylinder (12) mit Lochblende (19) ist, der den Detektor (5) aufnimmt.

3. Verwendung einer Anordnung nach Anspruch 1 und 2 zur Untersuchung von Silizium-Wafern.

**Claims**

1. An arrangement for the destruction-free measurement of metal traces in the surface of material specimens (2), in which the surface is subjected to X-ray irradiation (9), a detector (5) fixed above the material specimen (2) examining by spectrometry the irradiation emanating from the material specimen and in which the X-ray irradiation (9) can by means of an adjustable source of X-rays be orientated to scan the surface of the material specimen, and in which the divergence of the stimulating X-ray irradiation can be limited by two diaphragms (3, 4) which are disposed on a quartz member (6) which serves as an optical bench, characterised in that a positioning device 7, 8) is provided with which the material specimen (2) can be pressed against a surface (15) of the quartz member (6) and in that the positioning device has a pressing piston (8) and a pressing plane (7) for the material specimen (2), the inlet diaphragm (3) being a tongue diaphragm while the outlet diaphragm (4) is a cylinder diaphragm, both diaphragms being adjustable in relation to the surface (15).

2. An arrangement according to claim 1, characterised in that the outlet diaphragm (4) is a cylinder (12) with a perforated diaphragm (19) which accommodates the detector (5).

3. The use of an arrangement according to claim 1 and 2 for the examination of silicon wafers.

**Revendications**

1. Dispositif pour la mesure non destructive de traces de métal sur la surface d'échantillons de matière et dans lequel on applique à la surface un rayonnement X (9) et on examine par voie spectrométrique le rayonnement sortant de l'échantillon de matière, à l'aide d'un détecteur (5) situé au-dessus de l'échantillon de matière (2), et dans lequel le rayonnement X (9) peut être dirigé selon une disposition en forme de bande, au moyen d'une source réglable de rayons X, sur la surface de l'échantillon de matière et la divergence du rayonnement X d'excitation peut être limitée à l'aide de deux diaphragmes (3,4), et ces diaphragmes (3,4) sont disposés sur un corps en quartz (6) utilisé comme banc optique, caractérisé en ce qu'il est prévu un dispositif de positionnement (7,8), à l'aide duquel l'échantillon de matière (2) peut être comprimé contre une surface (15) du corps en quartz (6), et que le dispositif de positionnement possède un piston de compression (8) et un plan de compression (7) pour l'échantillon de matière (2), le diaphragme d'entrée (3) est un diaphragme à lamelles et le diaphragme de sortie (4) est un diaphragme cylindrique, ces diaphragmes étant réglables par rapport à la surface (15).

2. Dispositif selon la revendication 1, caractérisé en ce que le diaphragme de sortie (4) est un cylindre (12) possédant un diaphragme à trou (19), qui loge le détecteur (5).

3. Utilisation d'un dispositif selon les revendications 1 et 2 pour l'examen de pastilles en silicium.

Fig. 1

Fig. 2

Fig. 3

EP 0 235 640 B1

Fig. 4

Fig. 5

# Fig. 6

a)

Winkel

8.0

6.0

4.0

2.0

-70  -60  -50  -40  -30  -20  -10  0  10

Proben - Radius (mm)

Häufigkeit

b)

1  10  100  1000

Eindringtiefe (nm)

Intensität

c)

1  10  100  1000

Eindringtiefe (nm)

Fig. 7

a)

Winkel

8.0

6.0

4.0

2.0

-70  -60  -50  -40  -30  -20  -10  0  10

Proben-Radius (mm)

Häufigkeit

b)

1  10  100  1000

Eindringtiefe (nm)

Intensität

c)

1  10  100  1000

Eindringtiefe (nm)